# EUROPÄISCHE PATENTSCHRIFT

(11) **EP 2 144 787 B1**
(45) Veröffentlichungstag und Bekanntmachung des Hinweises auf die Patenterteilung: **01.02.2012**
(21) Anmeldenummer: 08717771.3
(22) Anmeldetag: 13.03.2008
(51) Int. Cl.: B60R 21/013, B60R 21/207

(54) **FAHRZEUGSITZANORDNUNG UND VERFAHREN ZUM SCHÜTZEN EINES FAHRZEUGINSASSEN**
MOTOR VEHICLE SEAT ARRANGEMENT AND METHOD FOR PROTECTING A VEHICLE PASSENGER
SYSTÈME D'ASSISE D'UN VÉHICULE AUTOMOBILE ET PROCÉDÉ DE PROTECTION D'UN PASSAGER

(30) Priorität: 15.03.2007 DE 102007013106; 23.11.2007 DE 102007057016
(43) Veröffentlichungstag der Anmeldung: 20.01.2010
(73) Patentinhaber: Takata-Petri AG, 63743 Aschaffenburg (DE)
(72) Erfinder: PURSCHE, Oliver, 89075 Ulm (DE); SENDELBACH, Hans-Peter, 89250 Senden (DE); BREUNINGER, Martin, 89233 Neu-Ulm (DE); NOZU, Hiroshi, Shiga 529-1156 (JP); GEISELHART, Werner, 89160 Dornstadt (DE); MILLER, Edwin, 89075 Ulm (DE); SIEVERS, Thomas, 89081 Ulm (DE)
(74) Vertreter: Staroske, Sandro
(86) Internationale Anmeldenummer: PCT/EP2008/053027
(87) Internationale Veröffentlichungsnummer: WO 2008/110610

(56) Entgegenhaltungen:
- EP-A- 1 369 314
- EP-A- 1 698 521
- DE-A1- 19 946 406
- DE-A1-102005 002 466
- DE-A1-102005 031 545
- DE-A1-102005 032 033
- DE-U1-202005 015 840
- JP-A- 11 078 767
- US-A1- 2001 011 812

## Beschreibung

Die Erfindung betrifft eine Fahrzeugsitzanordnung für ein Kraftfahrzeug sowie ein Verfahren zum Schützen eines Fahrzeuginsassen.

Es ist bekannt, ein Gassackmodul in einen Fahrzeugsitz eines Kraftfahrzeugs zu integrieren, das bei einer Kollision des Fahrzeugs einen Gassack entfaltet, der einen Aufprall des Fahrzeuginsassen auf Fahrzeugstrukturen dämpfen soll. Insbesondere bei einem Seitenaufprall ist der Abstand des Fahrzeuginsassen zu der Aufprallstelle jedoch kurz, so dass häufig keine befriedigende Schutzwirkung erzielt werden kann.

Aus der DE 10 2005 002 466 A1 ist ein Sicherheitssystem in einem Kraftfahrzeug bekannt, das einen Gassack umfasst, der in einer Lehne oder einem Sitzkissen eines Fahrzeugsitzes angeordnet ist.

Darüber hinaus offenbart auch die gattungsgemäße DE 20 2005 015 840 U1 einen in einer Rückenlehne eines Fahrzeugsitzes angeordneten Gassack.

Das von der vorliegenden Erfindung zu lösende Problem besteht darin, eine Fahrzeugsitzanordnung für ein Fahrzeug sowie ein Verfahren zum Schützen eines Fahrzeuginsassen anzugeben, mit denen ein verbesserter Schutz des Fahrzeuginsassen bei einer Kollision des Fahrzeugs erreicht werden kann.

Dieses Problem wird von der Fahrzeugsitzanordnung gemäß Anspruch 1, sowie durch das Verfahren gemäß Anspruch 15 gelöst. Vorteilhafte Weiterbildungen der Erfindung sind in den abhängigen Ansprüchen angegeben.

Danach ist eine Fahrzeugsitzanordnung für ein Kraftfahrzeug vorgesehen, mit
- einem Fahrzeugsitz;
- mindestens einem an dem Fahrzeugsitz angeordneten, zum Schutz eines auf dem Fahrzeugsitz befindlichen Fahrzeuginsassen aufblasbaren Element;
- Mitteln zum Aufblasen des aufblasbaren Elementes, die das aufblasbare Element in Abhängigkeit von einem Steuersignal, das eine Kollision des Kraftfahrzeuges oder eine sich anbahnende Kollision des Kraftfahrzeuges mit einem Objekt signalisiert, aufblasen, wobei
- die Fahrzeugsitzanordnung so im Fahrzeug anzuordnen und das aufblasbare Element derart ausgebildet und in oder an einer Seitenwange einer Rückenlehne des Fahrzeugsitzes angeordnet ist, dass es, während es als Reaktion auf das Steuersignal aufgeblasen wird, auf den Oberkörper des Fahrzeuginsassen einen Impuls ausübt, so dass der gesamte Fahrzeuginsasse von einem Kollisionsabschnitt des Fahrzeuges, der mit dem Objekt kollidiert oder kollidieren wird, weg verschoben wird oder die Thoraxregion des Oberkörpers des Fahrzeuginsassen eine Kippbewegung von dem Kollisionsabschnitt des Fahrzeuges weg ausführt.

Die Erfindung ermöglicht ein Aufblasen des aufblasbaren Elementes und damit ein Wegbewegen des Fahrzeuginsassen von der Kollisionsstelle insbesondere als Reaktion auf ein Pre-Crash-Signal, d.h. bevor das Fahrzeug mit dem Objekt tatsächlich kollidiert. Der Fahrzeuginsasse wird durch das sich aufblasende aufblasbare Element aus seiner Sitzposition heraus von dem Kollisionsabschnitt des Fahrzeuges (Kollisionsstelle) weg bewegt, wodurch ein zusätzlicher Abstand zwischen dem Fahrzeuginsassen und der Kollisionsstelle erzeugt wird. Dieser zusätzliche Abstand stellt einen zusätzlichen Absorptionsweg dar, wodurch die Folgen der Kollision für den Fahrzeuginsassen gemildert werden. Dies insbesondere, wenn der zusätzliche Abstand von einem Gassack genutzt wird, der sich beim tatsächlichen Eintreten der Kollision in den erzeugten Abstand hinein entfaltet und somit eine zusätzliche Wirkdicke aufweist, die die Schutzwirkung des Gassacks erhöht. Zudem kann durch das Wegbewegen des Fahrzeuginsassen die Relativgeschwindigkeit zwischen ihm und der infolge der Kollision in den Fahrzeuginnenraum intrudierenden Fahrzeugstruktur reduziert werden.

Es wird erwähnt, dass selbstverständlich auch mehrere aufblasbare Elemente in dem Fahrzeugsitz vorhanden sein können. Tritt eine Unfallsituation ein, wird das am besten geeignete aufblasbare Element oder mehrere geeignete aufblasbare Elemente aufgeblasen. Ein geeignetes aufblasbares Element ist ein Element, das so in Bezug zum Fahrzeuginsassen angeordnet ist, dass es den Fahrzeuginsassen möglichst effizient von der Unfallstelle weg bewegen kann, d.h. möglichst schnell und weit. Durch den Impuls des sich aufblasenden aufblasbaren Elementes wird zwar der Insasse relativ zum Fahrzeug (und relativ zu Teilabschnitten des Fahrzeugsitzes) bewegt, nicht jedoch der Fahrzeugsitz selber.

Das Ermitteln eines geeigneten Elementes kann insbesondere von einem Pre-Crash-System vorgenommen werden. Allerdings muss das Aufblasen des aufblasbaren Elementes (bzw. der Mehrzahl aufblasbarer Elemente) nicht unbedingt im Rahmen einer Pre-Crash-Maßnahme erfolgen, sondern kann auch vorgenommen werden, nachdem die Kollision des Fahrzeuges bereits begonnen hat, zum Beispiel um andere Schutzmechanismen (z.B. Seitengassäcke) des Fahrzeugs zu unterstützen.

In einer Variante der Erfindung ist vorgesehen, dass der Fahrzeuginsasse im Wesentlichen auf der Sitzfläche des Fahrzeugsitzes sitzen, während die Thoraxregion des Oberkörpers von der Unfallstelle weg bewegt wird, wobei die Thoraxregion des Oberkörpers eine "Kippbewegung" von der Unfallstelle weg ausführt.

Zum Übertragen des Impulses von dem aufblasbaren Element auf den Oberkörper des Fahrzeuginsassen kann beispielsweise das aufblasbare Element, während es aufgeblasen wird, die Form des Fahrzeugsitzes verändern, wobei durch die Formänderung des Sitzes (oder Teilbereichen des Sitzes) der Impuls auf den Fahrzeuginsassen ausgeübt wird.

Insbesondere kann das aufblasbare Element den Fahrzeuginsassen zur Fahrzeugmitte hin bewegen, wenn der Kollisionsabschnitt des Fahrzeugs (das heißt der Abschnitt des Fahrzeugs, der mit einem Objekt kollidieren wird oder bereits kollidiert) die zum Fahrzeugsitz nächstliegende Fahrzeuglängsseite umfasst ("Near-Side-Side impact"). Umgekehrt kann das aufblasbare Element den Fahrzeuginsassen auf die zum Fahrzeugsitz nächstliegende Fahrzeuglängsseite zu bewegen, wenn der Kollisionsabschnitt die Fahrzeuglängsseite umfasst, die der zum Fahrzeugsitz nächstliegenden Fahrzeuglängsseite gegenüber liegt ("Far-Side-Side impact").

Allgemein kann das aufblasbare Element bzw. die Mehrzahl aufblasbarer Elementen den Fahrzeuginsassen in eine für ihn günstigere Crash-Position bringen. Dabei kann der Fahrzeuginsasse zum Beispiel aus einer unüblichen Sitzposition (OOP-Situation) in eine für den Fahrzeugsitz übliche Sitzposition bewegt werden; das heißt der Fahrzeuginsasse wird aus einer OOP-Sitzhaltung in eine "normale" Sitzposition zurückgeführt und vom Kollisionsabschnitt des Fahrzeugs weg bewegt.

In einer Weiterbildung der erfindungsgemäßen Fahrzeugsitzanordnung weist der Fahrzeugsitz ein Mittelteil sowie mindestens eine Seitenwange auf, die das Mittelteil seitlich begrenzt. Das aufblasbare Element ist derart in der Seitenwange angeordnet, dass sich durch das Aufblasen des aufblasbaren Elementes die Form der Seitenwange verändert, wodurch der Impuls auf den Fahrzeuginsassen ausgeübt wird. Insbesondere können natürlich auch mehrere aufblasbare Elemente in einer oder in zwei gegenüberliegenden Seitenwangen des Fahrzeugsitzes vorhanden sein.

Die Seitenwange bzw. die Seitenwangen können z.B. ein Mittelteil einer Sitzlehne begrenzen, so dass das aufblasbare Element im Bereich des Oberkörpers des Fahrzeuginsassen angeordnet ist. Es kann jedoch zusätzlich oder alternativ vorgesehen sein, dass das Mittelteil der Sitzfläche des Fahrzeugsitzes von Seitenwangen begrenzt ist und mindestens ein aufblasbares Element aufweist, um auch den unteren Körperbereich des Fahrzeuginsassen vom Kollisionsabschnitt des Fahrzeuges weg bewegen zu können.

Die Mittel zum Aufblasen des aufblasbaren Elementes können beispielsweise in den Fahrzeugsitz integriert sein. Insbesondere sind die Mittel zum Aufblasen derart ausgebildet und in Bezug zum aufblasbaren Element angeordnet, das aufblasbare Element bei einer sich anbahnenden Kollision derart schnell aufzublasen, dass das Wegbewegen des Fahrzeuginsassen bereits vor der tatsächlichen Kollision (d.h. der Berührung des Fahrzeugs mit dem Objekt) beginnt. Zum Beispiel kann das Wegbewegen etwa 25 ms bis 500 ms vor dem Beginn der tatsächlichen Kollision erfolgen.

Zusätzlich können die Mittel zum Aufblasen ausgebildet und vorgesehen sein, das aufblasbare Element auch unabhängig von dem Steuersignal, das eine Kollision anzeigt, aufblasen zu können, um den Fahrzeugsitz den Konturen des Fahrzeuginsassen anzupassen, das heißt, um neben der Schutzfunktion eine zusätzliche Komfortfunktion zu verwirklichen.

Die Mittel zum Aufblasen des aufblasbaren Elementes können zudem mindestens ein Druckreservoir aufweisen, das ausgebildet und vorgesehen ist, impulsartig Gas in das aufblasbare Element abzugeben. Das Druckreservoir kann zum Beispiel in den Fahrzeugsitz integriert oder außerhalb des Fahrzeugsitzes angeordnet sein und durch eine unter Druck mit Gas (oder zum Beispiel auch mit Flüssiggas) befüllte Aufnahme realisiert sein.

In einer anderen Weiterbildung der Erfindung ist vorgesehen, dass mindestens ein in den Fahrzeugsitz integriertes Druckreservoir zum Aufblasen des aufblasbaren Elementes (bzw. der aufblasbaren Elemente) und mindestens ein z.B. außerhalb des Fahrzeugsitzes angeordneter Druckspeicher zum Befüllen des Druckreservoirs vorhanden ist. Der außerhalb des Fahrzeugsitzes (zentral im Fahrzeug) angeordnete Druckspeicher wiederum kann zum Beispiel mit einer Druckerzeugungseinrichtung, zum Beispiel in Form eines Kompressors, verbunden sein und durch diese etwa mit Druckluft befüllt werden. In einer anderen Variante wird ein lokales (d.h. in den Sitz integriertes) Druckreservoir direkt mittels einer Druckerzeugungseinrichtung befüllt. Des Weiteren ist auch möglich, dass nur eine Druckerzeugungseinrichtung außerhalb des Fahrzeugsitzes vorgesehen ist, mit der das aufblasbare Element über eine Verbindungsleitung verbunden ist, d.h. es wird direkt befüllt, ohne dass ein Druckreservoir im Fahrzeugsitz zwischengeschaltet ist.

Die Variante der Erfindung, wonach ein (lokales oder zentrales) Druckreservoir zum Befüllen des aufblasbaren Elementes vorgesehen ist, ist insbesondere geeignet, das aufblasbare Element wiederholt zu befüllen. Alternativ zu einem Druckreservoir kann z.B. ein Gasgenerator, der auf einem pyrotechnischen Erzeugen von Gas basiert, zum Aufblasen des aufblasbaren Elementes verwendet werden. Selbstverständlich können auch andere Arten von Gasgeneratoren eingesetzt werden, z.B. Hybrid- oder Kaltgasgeneratoren. Mit einem Gasgenerator ist jedoch im Allgemeinen nur ein einmaliges Befüllen des aufblasbaren Elementes möglich.

Zwischen dem Druckreservoir zum Aufblasen des aufblasbaren Elementes und dem aufblasbaren Element ist ein Strömungskanal mit möglichst großem Querschnitt vorgesehen, um im Auslösefall einen möglichst großen Gasfluss zum aufblasbaren Element und somit ein möglichst schnelles Befüllen des aufblasbaren Elementes zu ermöglichen. Zusätzlich kann zwischen dem Druckspeicher und dem aufblasbaren Element ein schnell schaltendes Ventil angeordnet sein, das als Reaktion auf das Steuersignal geöffnet wird und den Strömungskanal freigibt.

Insbesondere kann zwischen dem lokalen Druckreservoir, das in den Fahrzeugsitz integriert ist, und dem aufblasbaren Element ein erster Strömungskanal und zwischen dem zentralen Druckspeicher, der außerhalb des Fahrzeugsitzes angeordnet ist, und dem lokalen Druckreservoir ein zweiter Strömungskanal bestehen. Der Strömungsquerschnitt des zweiten Strömungskanals ist in einer Variante der Erfindung kleiner gewählt als der Strömungsquerschnitt des ersten Strömungskanals. Beispielsweise kann eine Struktur vorhanden sein, die den Strömungsquerschnitt des zweiten Strömungskanals abschnittsweise reduziert, z.B. eine Blende zwischen dem zentralen Druckspeicher und dem lokal im Fahrzeugsitz angeordneten Druckreservoir. Hierdurch lässt sich insbesondere eine Überlastung eines zum Befüllen des Druckspeichers verwendeten Kompressors vermeiden. Anstelle eines zentralen Druckspeichers kann der zweite Strömungskanal auch eine Druckerzeugungseinrichtung (z.B. Kompressor) mit dem lokalen Druckreservoir verbinden.

In einer anderen Weiterbildung der Erfindung sind Einstellmittel (z.B. in Form eines Regelventils) vorgesehen, die mit den Mitteln zum Aufblasen des aufblasbaren Elementes zusammenwirken und mittels derer eine Befüllgeschwindigkeit, mit der das aufblasbare Element aufgeblasen wird, einstellbar ist. Insbesondere können die Einstellmittel eine stufenlose Einstellung ermöglichen. Möglich ist jedoch auch, dass mittels der Einstellmittel eine erste und eine zweite Befüllgeschwindigkeit einstellbar ist, wobei die erste Befüllgeschwindigkeit vom Betrag her größer ist als die zweite Befüllgeschwindigkeit (zweistufige Einstellmöglichkeit). Dies erlaubt bei Wahl der größeren Befüllgeschwindigkeit das schnelle Befüllen des aufblasbaren Elementes in einer Unfallsituation und bei Wahl der kleineren Befüllgeschwindigkeit ein Befüllen des aufblasbaren Elementes zu Komfortzwecken.

Anstelle der zweistufigen Einstellmöglichkeit kann natürlich allgemein eine mehrstufige Einstellmöglichkeit vorhanden sein. Die Einstellmittel weisen z.B. ein Regelventil auf, dessen Querschnitt einstellbar ist. In einem anderen Beispiel sind mindestens zwei Ventile mit unterschiedlichem Querschnitt vorgesehen, wobei mit zwei Ventilen bereits drei unterschiedliche Befüllgeschwindigkeiten realisiert werden können (Befüllung über eines der beiden Ventile bzw. über beide Ventile zusammen).

Insbesondere kann über die Einstellmittel eine Anpassung der Befüllgeschwindigkeit (und/oder des Befülldrucks) in Abhängigkeit von der voraussichtlichen Schwere der Kollision erfolgen. Beispielsweise können für eine Abschätzung der zur erwartenden Unfallschwere Daten einer Pre-Crash-Sensorik (z.B. einer Radarvorrichtung) herangezogen werden.

In einer weiteren Ausgestaltung der Erfindung ist das aufblasbare Element reversibel ausgebildet, das heißt, es nimmt nach einem Aufblasen und Entleeren wieder seinen Zustand (seine Form und Lage) vor dem Aufblasen ein. Hierfür kann das aufblasbare Element aus einem Material gebildet sein, das eine ausreichende Eigenelastizität aufweist, so dass das aufblasbare Element nach einem Aufblasen und Entleeren wieder seine ursprüngliche Form ausbildet. Beispiele für ein derartiges Material sind Gummi oder silikonisiertes (d.h. mit Silikon beschichtetes) Gassackgewebe.

Das aufblasbare Element kann zudem eine im Wesentlichen gasdicht ausgeführte aufblasbare Kammer aufweisen. Zum Erzeugen einer derartigen dichten Kammer kommt zum Beispiel ein konventionelles Gassackgewebe infrage, wie z. B. gewobenes Nylon, das etwa durch Silikonisieren gedichtet ist. An dieser Stelle wird darauf hingewiesen, dass das aufblasbare Element nicht nur eine sondern auch mehrere aufblasbare Kammern aufweisen kann, die je nach Bedarf auch mit unterschiedlichen Drücken aufblasbar sein können (und auch nicht alle gasdicht ausgeführt sein müssen). Grundsätzlich kann auch ein aufblasbares Element mit einer Kammer verwendet werden, die nicht gasdicht ausgeführt ist. Zum Beispiel kann ein üblicher Gassack, der für Gassack-Rückhaltesysteme verwendet wird, eingesetzt werden, wobei Undichtigkeiten zum Beispiel im Bereich von Nähten in Kauf genommen werden.

Wie weiter oben bereits ausgeführt, kann die Fahrzeugsitzanordnung mehrere in den Fahrzeugsitz integrierte aufblasbare Elemente aufweisen. Insbesondere können zwei (oder auch mehr als zwei) aufblasbare Elemente vorhanden sein, die derart (z.B. aneinanderliegend) angeordnet sind, dass sie jeweils einen im Wesentlichen gleichen (zumindest gleichgerichteten) Impuls auf den Fahrzeuginsassen ausüben können. Die von den aufblasbaren Elementen auf den Fahrzeuginsassen beim Aufblasen ausgeübten Impulse addieren sich also näherungsweise. Die aufblasbaren Elemente können beispielsweise jeweils aus einem flächigen Zuschnitt (z.B. aus zwei entlang ihres Umfangs miteinander verbundenen Materiallagen) gebildet und so angeordnet sein, dass das eine aufblasbare Element das andere im Wesentlichen vollständig überlappt. Die aufblasbaren Elemente sind in dieser Variante also gestapelt übereinander angeordnet.

Darüber hinaus kann das Aufblasen des aufblasbaren Elementes insbesondere adaptiv erfolgen, das heißt an Körperkenngrößen des Fahrzeuginsassen angepasst sein. Hierfür können Sensoren z. B. in den Fahrzeugsitz integriert sein, die etwa Körpergewicht oder die Breite des Fahrzeuginsassen bestimmen.

Weiterhin umfasst die Erfindung neben der Verwendung des aufblasbaren Elementes als Schutzsystem - bzw. zusätzlich als Komfortelement zum Anpassen der Form des Fahrzeugsitzes an die Körperkonturen des Fahrzeuginsassen - das Aufblasen des aufblasbaren Elementes zum Erzeugen einer körperlich wahrnehmbaren Warnung an den Fahrzeuginsassen. Bei einer drohenden Unfall- oder allgemein Gefahrensituation kann das aufblasbare Element so aufgeblasen werden, dass der Fahrzeuginsasse (leicht) angestoßen wird, um ihn auf die Gefahrensituation aufmerksam zu machen.

In einer anderen Variante der Erfindung ist das aufblasbare Element zumindest abschnittsweise von einer Abdeckung abgedeckt, wobei die Abdeckung z.B. von einem Bezug des Fahrzeugsitzes ausgebildet wird. Die Fahrzeugsitzanordnung kann darüber hinaus Mittel (beispielsweise eine Feder oder einen Gummizug) zum Ausüben einer Rückstellkraft auf die Abdeckung im Bereich des aufblasbaren Elementes aufweisen, so dass die Abdeckung die Tendenz hat, nach einem Aufblasen und Wiederentleeren des aufblasbaren Elementes in ihren Zustand vor dem Aufblasen des aufblasbaren Elementes zurückzukehren. Das Befüllen und Entleeren des aufblasbaren Elementes kann somit reversibel erfolgen, z.B. für den Fall, dass das aufblasbare Element zu Komfortzwecken aktiviert wird oder falls das aufblasbare Element aufgrund eines Pre-Crash-Signals aufgeblasen wird, der Unfall aber doch nicht eintritt.

Insbesondere kann die Abdeckung im Bereich des aufblasbaren Elementes so elastisch ausgebildet sein, dass sie sich bei einem Aufblasen des aufblasbaren Elementes dehnt und die Tendenz hat, nach einem Wiederentleeren des aufblasbaren Elementes in ihren ursprünglichen Zustand zurückzukehren. Beispielsweise ist die Abdeckung aus einem elastischen textilen Gewebe gebildet, dass derart dehnbar ist, dass die Abdeckung beim Aufblasen des aufblasbaren Elementes nicht beschädigt wird.

In einer Weiterbildung weist der Fahrzeugsitz eine Sitzpolsterung auf, die zumindest teilweise von einem Sitzbezug abgedeckt ist und das aufblasbare Element zumindest abschnittsweise zwischen der Sitzpolsterung und dem Sitzbezug angeordnet ist, d.h. der Sitzbezug bildet mit einem Abschnitt die Abdeckung aus. Für das aufblasbare Element kommen natürlich auch andere Einbaupositionen in Frage, z.B. an einer Innenseite (die dem Sitzbezug abgewandt ist) der Polsterung. Das aufblasbare Element kann so angeordnet sein, dass es in aufgeblasenem Zustand nicht aus dem Sitzbezug heraustritt.

In einer weiteren Ausführungsform erstreckt sich das aufblasbare Element zumindest abschnittsweise in einer Umhüllung, die in unaufgeblasenen Zustand des aufblasbaren Elementes zumindest mit einem Abschnitt den Konturen des Fahrzeugsitzes folgt, z.B. an einer Außenseite des Fahrzeugsitzes anliegt. Bei Entfalten des aufblasbaren Elementes entfemt sich der Abschnitt vom dem Fahrzeugsitz.

In einer Variante weist die Umhüllung Mittel auf, über die ein Abschnitt der Umhüllung vor dem Aufblasen derart lösbar mit dem Fahrzeugsitz verbunden ist, dass er sich bei Entfalten des aufblasbaren Elementes löst. Die Mittel umfassen z.B. Strukturen für einen Klett- oder Druckknopfverschluss. Darüber hinaus können Mittel vorhanden sein, die die Umhüllung nach Entfalten und Wiederentleeren des aufblasbaren Elementes in ihre Ausgangsposition zurückbringen, z.B. in Form eines elastischen Elementes.

Es wird darauf hingewiesen, dass das Steuersignal nicht nur von einer Pre-Crash-Sensorik erzeugt werden kann, sondern als Steuersignal z.B. auch ein Signal einer ESC (Electronic Stability Control)-Einheit ("ESP-Einheit") verwendet werden kann. Alternativ kann das Steuersignal auch von einer Crash-Sensorik, die einen tatsächlich eingetretenen Unfall registriert, erzeugt werden, so dass das aufblasbare Element nicht vor dem Unfall, sondern erst bei Eintreten des Unfalls aktiviert wird.

Ein Pre-Crash-Steuersignal wird z.B. 0 - 1000 ms vor dem voraussichtlichen Unfall erzeugt. Insbesondere kann das aufblasbare Element oder mehrere aufblasbare Elemente zusammen eine Bewegung des Fahrzeuginsassen mit einer Geschwindigkeit von 0,1 - 1,5 m/s hervorrufen. Das aufblasbare Element kann z.B. mit einem Innendruck zwischen 5 und 500 kPa aufgeblasen werden. Es versteht sich, dass diese Werte nur beispielhaft sind und die Erfindung selbstverständlich auch andere Varianten umfasst, z.B. niedrigere oder höhere Innendrücke des aufblasbaren Elementes.

Des Weiteren betrifft die Erfindung in einem anderen Aspekt eine Fahrzeugsitzanordnung mit einem aufblasbaren Element sowie Mitteln zum Dämpfen eines Aufpralls eines in dem Fahrzeugsitz befindlichen Fahrzeuginsassen auf das aufblasbare Element in aufgeblasenem Zustand. Die Mittel ermöglichen somit eine Absorption von Aufprallenergie, um das Verletzungsrisiko für den Fahrzeuginsassen bei einem Aufprall auf das gefüllte aufblasbare Element zu reduzieren. Insbesondere kann ein derartiges aufblasbares Element zusätzlich oder alternativ zu einem Seitengassack, der zwischen dem Fahrzeugsitz und einer Fahrzeuglängsseite angeordnet ist, vorhanden sein.

In einer Variante umfassen die Mittel mindestens eine Ausströmöffnung (Venthole), über die Gas aus dem aufblasbaren Element herausströmen kann. Insbesondere kann die Ausströmöffnung in Form eines (z.B. schaltbaren) Ventils realisiert sein, das z.B. bei Erreichen eines vorgebbaren Innendrucks in dem aufblasbaren Element oder zeitabhängig öffnet und geöffnet bleiben kann oder nach einer bestimmten Zeit wieder schließen kann, um einen Mindestinnendruck in dem aufblasbaren Element aufrecht zu erhalten.

Darüber hinaus betrifft die Erfindung ein Verfahren zum Schützen eines Fahrzeuginsassen mit den Schritten:
- Bereitstellen eines Fahrzeugsitzes mit mindestens einem in oder an einer Seitenwange einer Rückenlehne des Fahrzeugsitzes angeordneten aufblasbaren Element;
- Erzeugen eines Steuersignals, das eine Kollision des Kraftfahrzeuges oder eine sich anbahnende Kollision des Kraftfahrzeuges mit einem Objekt signalisiert;
- Aufblasen des aufblasbaren Elementes in Abhängigkeit von dem Steuersignal, wobei
- das aufblasbare Element, während es als Reaktion auf das Steuersignal aufgeblasen wird, auf den Oberkörper eines in dem Fahrzeugsitz befindlichen Fahrzeuginsassen einen Impuls ausübt, so dass der gesamte Fahrzeuginsasse von einem Kollisionsabschnitt des Fahrzeuges, der mit dem Objekt kollidiert oder kollidieren wird, weg verschoben wird oder die Thoraxregion des Oberkörpers des Fahrzeuginsassen eine Kippbewegung von dem Kollisionsabschnitt des Fahrzeuges weg ausführt, wobei
- zu einem ersten Zeitpunkt ein erstes Steuersignal und zu einem zweiten Zeitpunkt ein zweites Steuersignal erzeugt wird; und
- das aufblasbare Element auf das erste Steuersignal mit einer ersten Befüllgeschwindigkeit und auf das zweite Steuersignal mit einer zweiten Befüllgeschwindigkeit befüllt wird, die verschieden von der ersten Befüllgeschwindigkeit ist.

Beispielsweise kann das aufblasbare Element auf das Steuersignal hin nur teilweise aufgeblasen werden, was für bestimmte Unfallsituationen günstiger sein kann. Das aufblasbare Element wird in dieser Variante z.B. nicht so befüllt, dass es den Fahrzeuginsassen möglichst weit wegschiebt, sondern derart, dass es ihn (z.B. aus einer oop-Lage) in eine mittige Lage in Bezug auf den Fahrzeugsitz bringt. Dies kann insbesondere bei einem Schleudern des Fahrzeugs vorteilhaft sein, da hier die Kollisionsseite schwer vorherbestimmbar ist. Als Steuersignal kann z.B. ein Signal einer ESC-Einheit verwendet werden.

In einer anderen Weiterbildung des Verfahrens wird
- zu einem ersten Zeitpunkt ein erstes Steuersignal und zu einem zweiten Zeitpunkt ein zweites Steuersignal erzeugt, wobei
- das aufblasbare Element auf das erste Steuersignal mit einer ersten Befüllgeschwindigkeit befüllt und auf das zweite Steuersignal mit einer zweiten Befüllgeschwindigkeit befüllt wird, die verschieden von der ersten Befüllgeschwindigkeit ist.

Insbesondere ist die zweite Befüllgeschwindigkeit größer ist als die erste, d.h. das aufblasbare Element wird zunächst mit einer relativ kleinen Geschwindigkeit (bzw. Volumenstrom) befüllt und in einer späteren Phase mit einer höheren Geschwindigkeit. Dies kann sinnvoll sein, da die Prädiktionssicherheit von Pre-Crash-Einheiten zunimmt, je zeitlich näher der voraussichtliche Unfall rückt. Somit kann in einer relativ frühen Phase der Detektion eines voraussichtlichen Unfall, z.B. etwa 300 ms vor dem Unfall, das aufblasbare Element bereits langsam so befüllt werden, dass der Fahrer nicht irritiert wird. Beispielsweise kann eine Gefahrensituation in gut einsehbarem Gelände (z.B. per Radar) schon lange vor einem möglichen Unfall registriert werden, was zu einer Vorbefüllung des aufblasbaren Elementes genutzt werden kann.

Zu einem späteren Zeitpunkt (z.B. etwa 100ms vor dem berechneten Unfallzeitpunkt) kann die Befüllgeschwindigkeit dann (z.B. auf einen Maximalwert) erhöht werden, wenn das Eintreten eines Unfalls als wahrscheinlich anzusehen ist und/oder genauere Informationen zur erwartenden Unfallschwere vorliegen. Die unterschiedliche Befüllgeschwindkeiten können, wie weiter oben bereits erwähnt, z.B. über ein stufenlos regelbares Ventil oder eine Mehrzahl von Ventilen unterschiedlichen Querschnitts realisiert werden.

Auch kann sich zu dem zweiten Zeitpunkt abzeichnen, dass der Unfall gar nicht oder mit geringerer Schwere eintreten wird, so dass das Befüllen abgebrochen oder mit geringerer Geschwindigkeit fortgesetzt wird.

Es können auch zu mehr als zwei Zeitpunkten Steuersignale erzeugt und in Abhängigkeit von diesen Steuersignalen somit mehr als zwei unterschiedliche Befüllgeschwindigkeiten zum Befüllen des aufblasbaren Elementes verwendet werden.

In einer anderen Ausgestaltung des Verfahrens weist der Fahrzeugsitz zwei einander gegenüberliegende aufblasbare Elemente auf, wobei nur das der voraussichtlichen Kollisionsstelle zugewandte aufblasbare Element aufgeblasen wird. Sollte sich das zur Kollisionsstelle weiter entfernte aufblasbare Element in aufgeblasenem Zustand befinden, kann es entleert werden, während das andere Element aufgeblasen wird. Ein Wegschieben des Fahrzeuginsassen wird somit nicht durch ein aufgeblasenes Element auf der der Kollisionsstelle abgewandten Seite behindert.

In einer anderen Variante weist der Fahrzeugsitz eine Mehrzahl in derselben Richtung wirkender aufblasbarer Elemente auf, wobei auf das Steuersignal hin sämtliche dieser aufblasbaren Elemente aufgeblasen werden (Schutzfunktion). Alternativ wird nur eines oder werden nur einige dieser aufblasbaren Elemente aufgeblasen (z.B. bei Verwendung der aufblasbaren Elemente zu Komfortzwecken). Die aufblasbaren Elemente können z.B. so angeordnet sein, dass sie sich zwischen einer Sitzpolsterung und einem auf dem Sitz befindlichen Fahrzeuginsassen übereinander erstrecken.

Die Erfindung wird im Folgenden anhand von Ausführungsbeispielen unter Bezugnahme auf die Figuren näher erläutert. Es zeigen:
- Fig. 1a bis 1c: eine erste Ausführungsvariante der erfindungsgemäßen Fahrzeugsitzanordnung;
- Fig. 2: die Fahrzeugsitzanordnung der Figuren 1a bis 1c nach Aufblasen eines aufblasbaren Elementes;
- Fig. 3: eine Anordnung zum Aufblasen eines aufblasbaren Elementes;
- Fig. 4: schematisch eine Fahrzeugsitzanordnung gemäß einer zweiten Ausführungsform der Erfindung in einer Ansicht von oben;
- Fig. 5: einen Ausschnitt einer Fahrzeugsitzanordnung gemäß einer dritten Ausführungsform der Erfindung;
- Fig. 6: einen Ausschnitt einer Fahrzeugsitzanordnung gemäß einer vierten Ausführungsform der Erfindung;
- Fig. 7: die Anordnung der Fig. 6 mit aufblasbaren Elementen in aufgeblasenem Zustand;
- Fig. 8: schematisch einen Schnitt durch einen erfindungsgemäßen Fahrzeugsitz.

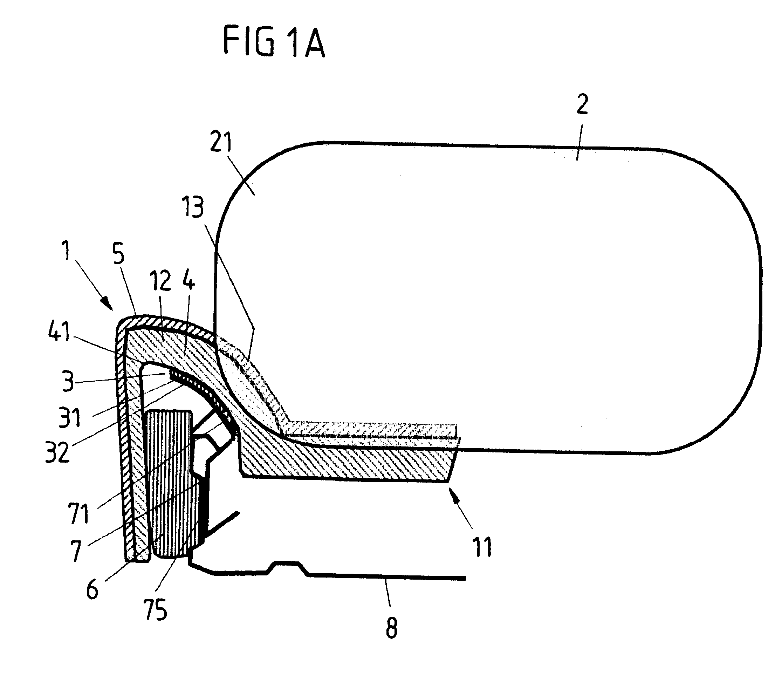

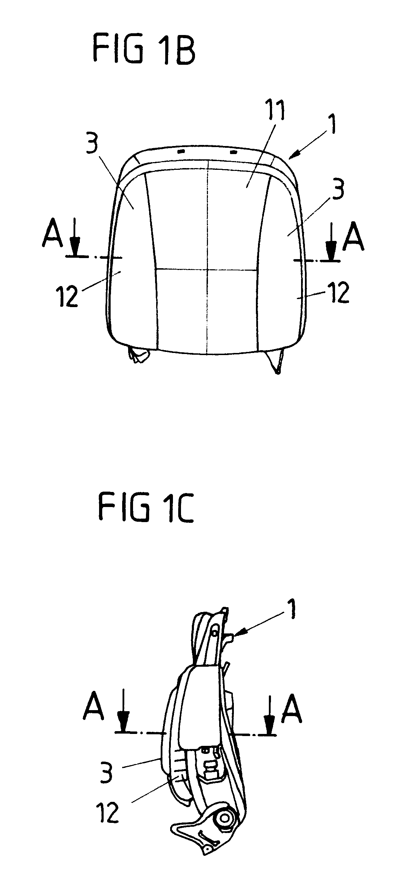

Fig. 1 a zeigt eine schematische Querschnittsdarstellung einer Rückenlehne 1 eines Fahrzeugsitzes gemäß einer Variante der erfindungsgemäßen Fahrzeugsitzanordnung. Figuren 1b und 1c zeigen eine Vorder- bzw. eine Seitenansicht der Rückenlehne 1.

Auf dem Fahrzeugsitz (nicht komplett dargestellt) befindet sich ein Fahrzeuginsasse 2 (nicht dargestellt in den Figuren 1b und 1c), der sich mit seinem Rücken an die Rückenlehne 1 anlehnt. Die Rückenlehne 1 weist ein Mittelteil 11 auf, das seitlich von Seitenwangen 12 begrenzt ist, wobei in Fig. 1a nur etwa eine Hälfte der Rückenlehne 1 und somit nur eine Seitenwange gezeigt ist. Figur 1b ist zu entnehmen, dass das Mittelteil 11 beiderseits durch Seitenwangen 12 begrenzt ist. Die Seitenwangen 12 verlaufen längs einer Seite 21 des Fahrzeuginsassen 2, so dass dieser durch die Seitenwangen 12 seitlich gestützt ist.

In die Seitenwangen 12 ist jeweils ein aufblasbares Element 3 integriert. Die aufblasbaren Elemente 3 weisen jeweils eine aufblasbare Kammer 31 auf, die mit einem Gas (z. B. Druckluft) befüllt werden kann. Durch Aufblasen eines der aufblasbaren Elemente 3 kann die Form der Seitenwange 12 verändert und auf den Fahrzeuginsassen 2 ein Impuls ausgeübt werden. Das Aufblasen der aufblasbaren Elemente erfolgt in Abhängigkeit eines Steuersignals z.B. eines Pre-Crash-Systems, das eine drohende Kollision des Fahrzeugs signalisiert. Das aufblasbare Element 3 ist derart beschaffen und in Bezug zu dem Fahrzeuginsassen 2 angeordnet, dass dessen Oberkörper durch den Impuls, den das aufblasbare Element, während es als Reaktion auf das Steuersignal aufgeblasen wird, auf ihn ausübt, aus der ursprünglichen Position weg bewegt wird.

Hierbei wird dasjenige der beiden aufblasbaren Elemente 3 aufgeblasen, das einen Impuls auf den Fahrzeuginsassen ausübt, der von einem Kollisionsabschnitt des Fahrzeug, der mit einem Objekt kollidieren wird, wegweist, d.h. den Fahrzeuginsassen zumindest teilweise (mit dem Oberkörper) von dem Kollisionsabschnitt weg bewegt. So kann z.B. bei einem Seitenunfall das aufblasbare Element derjenigen Seitenwange aktiviert werden, die der voraussichtlich von der Kollision betroffenen Fahrzeuglängsseite zugewandt ist, um den Fahrzeuginsassen von der betroffenen Seite des Fahrzeuges weg zu bewegen.

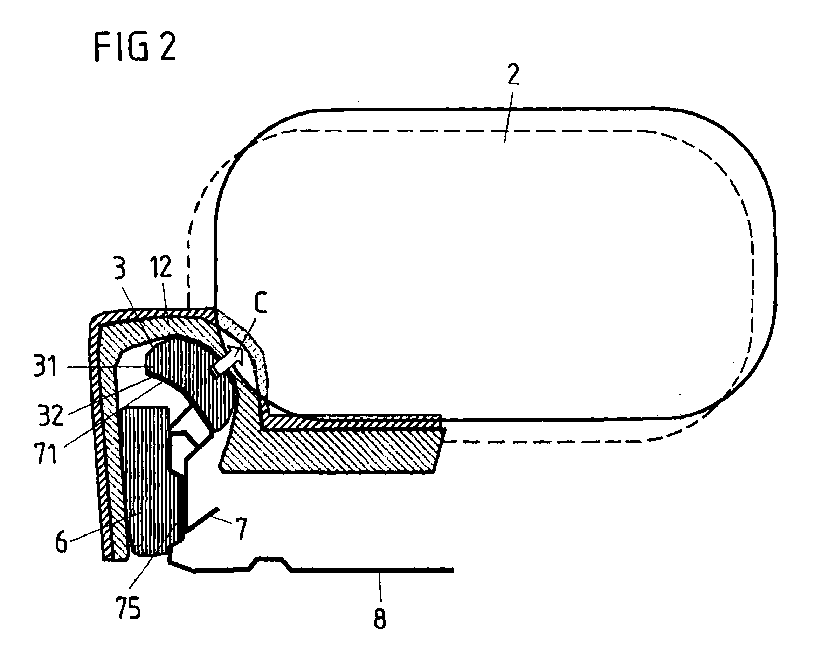

Das Wegbewegen des Fahrzeuginsassen 2 ist in Fig. 2 gezeigt, wonach der Fahrzeuginsasse 2 aus seiner ursprünglichen Position (gestrichelte Linie) in eine neue Position (durchgezogene Linie) entlang einer Richtung C bewegt wird. In diesem Beispiel wird der Oberkörper des Fahrzeuginsassen von der Unfallstelle weg bewegt (gekippt), während der Fahrzeuginsasse mit seinem Unterkörper im Wesentlichen seine ursprüngliche Sitzposition beibehält. Es kann jedoch auch vorgesehen sein, dass in eine Sitzfläche des Fahrzeugsitzes mindestens ein zusätzliches aufblasbares Elemente angeordnet ist, um den Fahrzeuginsassen auch mit seinem unteren Bereich (Beckenbereich) zu verschieben, so dass der Fahrzeuginsassen insgesamt bewegt wird.

Das aufblasbare Element 3 ist an einer Innenseite 41 einer Sitzpolsterung 4 (die ihrerseits zum Fahrzeuginsassen hin mit einem Sitzbezug 5 abgedeckt ist) so angeordnet, dass es sich auch nach dem Aufblasen innerhalb der Seitenwange 12, d.h. innerhalb des Fahrzeugsitzes erstreckt. Durch das Aufblasen des aufblasbaren Elementes 3 wird die Form der Seitenwange 12 (insbesondere der Polsterung 4) verändert, wodurch der Impuls auf den Fahrzeuginsassen 2 ausgeübt wird.

Durch das Wegbewegen des Fahrzeuginsassen von der Kollisionsstelle entsteht zwischen der Kollisionsstelle und dem Fahrzeuginsassen ein zusätzlicher Absorptionsweg, der die Unfallwirkung auf den Fahrzeuginsassen mildert. Zudem kann der zusätzlich erzeugte Abstand von einem sich während der Kollision zusätzlich entfaltenden Gassack (z.B. Seitengassack) genutzt werden, so dass eine zusätzliche Gassack-Wirkdicke entsteht. Wie in Figuren 1a und 2 gezeigt, ist in der Seitenwange 12 neben dem aufblasbaren Element 3 ein Seitengassackmodul 6 angeordnet, das einen Gassack aufweist, der beim Eintreten der Kollision aufgeblasen wird und sich zwischen dem Fahrzeuginsassen und einer Fahrzeuglängsseite erstreckt. Das Seitengassackmodul 6 ist ein übliches Gassackmodul, das neben dem Gassack einen Gasgenerator zum Aufblasen des Gassacks enthält.

Zum Aufblasen steht das aufblasbare Element 3 mit Mitteln zum Aufblasen (nicht dargestellt) in Verbindung, die in den Fahrzeugsitz, d.h. zum Beispiel in die Rückenlehne 1, integriert sein können oder sich auch außerhalb des Fahrzeugsitzes befinden können.

Die Seitenwangen 12 weisen darüber hinaus jeweils Stützstrukturen 7 auf, die das aufblasbare Element 3 abstützen. Die Stützstrukturen 7 sind jeweils mit einem Abschnitt 75 mit einem Rahmen 8 der Sitzlehne 1 verbunden. Zudem bilden die Stützstrukturen jeweils 7 einen Abschnitt 71 aus, der sich entlang einer dem Fahrzeuginsassen 2 (bzw. einer Anlehnseite 13 der Rückenlehne 1) abgewandten Seite 32 des aufblasbaren Elementes 3 erstreckt. Durch den Stützabschnitt 71 wird erreicht, dass sich das aufblasbare Element 3 während des Aufblasens auf den Fahrzeuginsassen 2 zu vergrößert und nicht von ihm weg, so dass auf den Fahrzeuginsassen ein möglichst großer Impuls ausgeübt wird und nach Aufblasen ein möglichst großer Abstand zwischen dem Fahrzeuginsassen und der Kollisionsstelle besteht.

Es wird darauf hingewiesen, dass in einer Seitenwange selbstverständlich auch mehrere aufblasbare Elemente angeordnet sein können. Zum Beispiel können mehrere aufblasbare Elemente mit unterschiedlichen Orientierungen angeordnet sein, so dass sich die aufblasbaren Elemente im aufgeblasenen Zustand in unterschiedliche Richtungen erstrecken würden, wodurch je nach Wahl des Elementes, das aufgeblasen werden soll, ein Bewegen des Fahrzeuginsassen in unterschiedliche Richtungen möglich ist. Die Wahl, welches der aufblasbaren Elemente oder welche Gruppe von Elementen aufgeblasen werden sollen erfolgt insbesondere in Abhängigkeit von der Lage der Kollisionsstelle. Zusätzlich können Elemente aktiviert werden, die den Fahrzeuginsassen aus einer OOP-Lage in Richtung einer "normalen" Sitzposition bringen.

Ferner wird darauf hingewiesen, dass ein Fahrzeugsitz einer erfindungsgemäßen Fahrzeugsitzanordnung nicht unbedingt symmetrisch ausgeführt sein muss, sondern z.B. nur in einer Seitenwange ein aufblasbares Element oder Mittel zum Aufblasen aufweist.

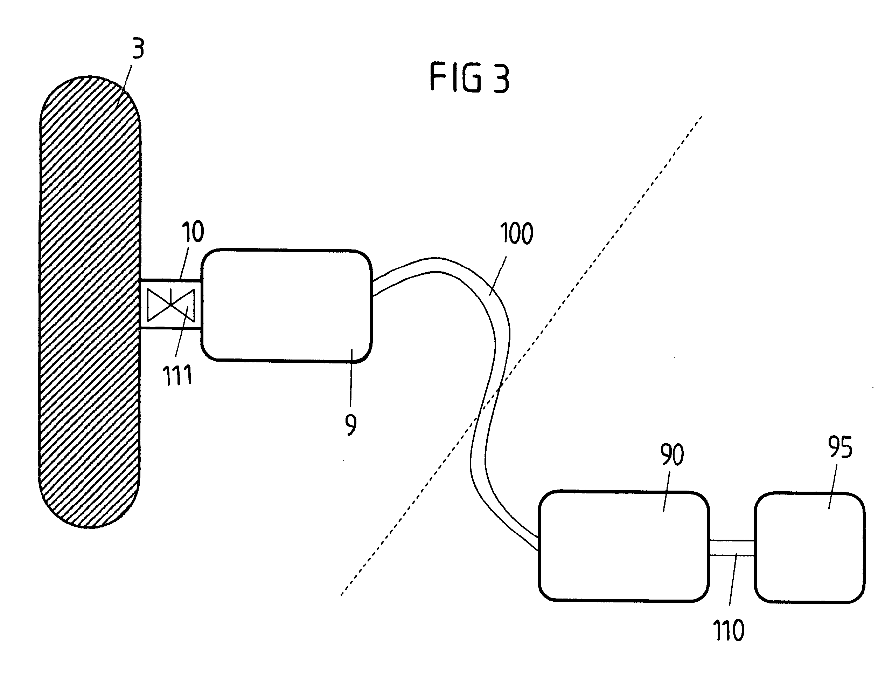

Fig. 3 zeigt schematisch eine Vorrichtung zum Aufblasen (Befüllen) eines aufblasbaren Elementes 3 für eine erfindungsgemäße Fahrzeugsitzanordnung (nicht dargestellt). Die Vorrichtung weist Mittel zum Aufblasen des aufblasbaren Elementes 3 auf, die ein lokales, in einen Fahrzeugsitz der Fahrzeugsitzanordnung zu integrierendes Druckreservoir 9 umfassen. Das Druckreservoir 9 ist ein im Wesentlichen gasdicht ausgeführter Behälter, der mit einem Gas, insbesondere mit Druckluft, oder mit einem Flüssiggas befüllt werden kann und mit dem aufblasbaren Element 3 über einen Strömungskanal 10 in Strömungsverbindung steht.

Der Strömungskanal 10 weist einen großen Querschnitt auf und kann mittels eines schnellen Schaltventils 111 als Reaktion auf ein Steuersignal (z. B. einer Pre-Crash-Sensorik) schlagartig freigegeben werden, so dass aus dem Druckreservoir 9 impulsartig Gas in das aufblasbare Element abgegeben werden und dieses somit schlagartig befüllt werden kann. Insbesondere sind der Strömungskanal 10 und das Ventil 111 so ausgebildet, dass der von dem Druckreservoir 9 in das aufblasbare Element 3 einströmende Gasstrom groß genug ist, das aufblasbare Element aufzublasen, bevor eine von einem Pre-Crash-System detektierte Kollision tatsächlich eintritt.

Zum Befüllen des lokalen Druckspeichers 9 ist ein zentraler, außerhalb des Fahrzeugsitzes anzuordnender Druckspeicher 90 vorgesehen, der über einen weiteren Strömungskanal 100 mit dem lokalen Druckspeicher 9 in Strömungsverbindung steht. Der zentrale Druckspeicher 90 wird von einem ebenfalls außerhalb des Fahrzeugsitzes anzuordnenden Kompressor 95 (Druckerzeugungseinrichtung) gespeist, der Druckluft erzeugt und über einen Strömungskanal 110 in den zentralen Druckspeicher 90 leitet. Der zentrale Druckspeicher 90 kann beispielsweise dazu auch ausgebildet sein, mehrere lokale Druckspeicher, die z.B. auch in verschiedenen Fahrzeugsitzen angeordnet sein können, zu versorgen. Die Aufteilung in einen lokalen (Fahrzeugsitz) und einen zentralen Bereich ist in Fig. 3 durch eine gestrichelte Linie angedeutet.

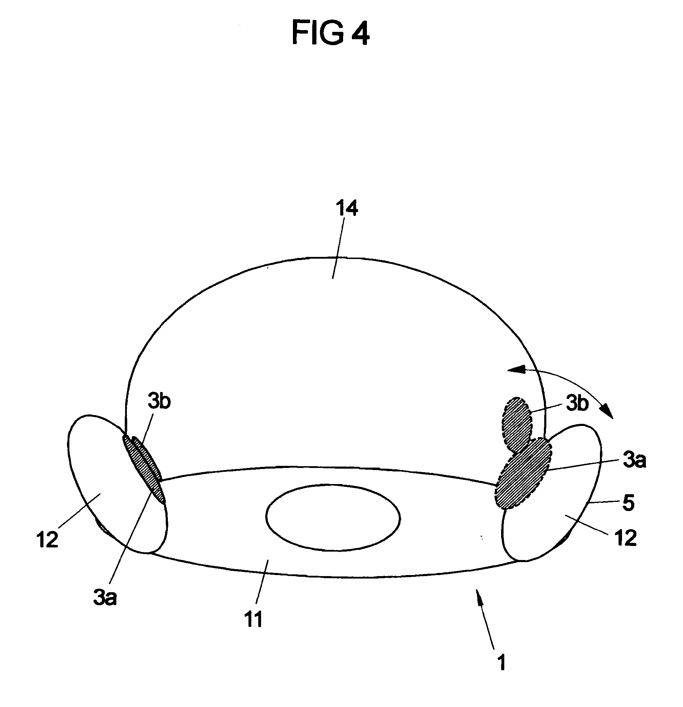

Die schematische Darstellung der Figur 4 zeigt einen Fahrzeugsitz von oben, der eine Sitzfläche 14 sowie eine Rückenlehne 1 mit einem Mittelteil 11 aufweist, das von zwei einander gegenüberliegenden Seitenwangen 12 begrenzt ist.

An jeder der Seitenwangen 12 sind jeweils zwei aufblasbare Elemente 3a, 3b angeordnet, über die ein Impuls auf einen auf dem Sitz befindlichen Fahrzeuginsassen (nicht dargestellt) ausgeübt werden kann. Die aufblasbaren Elemente 3a, 3b sind an einer Seite der Seitenwangen 3 angeordnet, die einem Fahrzeuginsassen auf dem Sitz zugewandt ist, so dass sie sich übereinander zwischen der Seitenwange 3 und dem Fahrzeuginsassen erstrecken. Die aufgeblasenen Elemente der rechten Seitenwange sind aufgeblasen, während sich die aufblasbaren Elemente der linken Seitenwange im nicht aufgeblasenen Zustand befinden.

Die aufblasbaren Elemente können auch unterhalb eines Bezuges 5 des Fahrzeugsitzes angeordnet sein, d.h. sie befinden sich zwischen dem Sitzbezug 4 und einem Sitzkern, z.B. einer Polsterung. Insbesondere können die beiden aufblasbaren Elemente 3a, 3b so ausgebildet und angeordnet sein, dass sie sich auch im aufgeblasenen Zustand unterhalb des Sitzbezuges 5 erstrecken, d.h. von diesem abgedeckt sind.

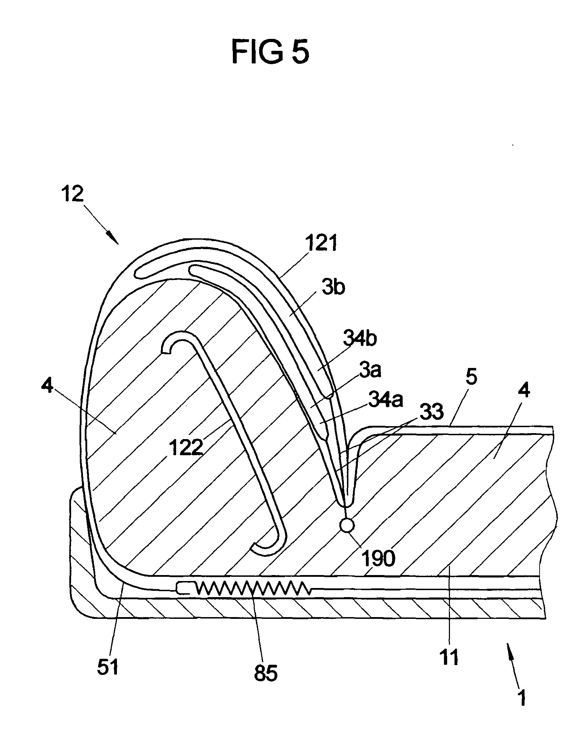

Fig. 5 betrifft eine weitere Variante der erfindungsgemäßen Fahrzeugsitzanordnung. Wie in den vorhergehenden Figuren weist eine Rückenlehne 1 ein Mittelteil 11 auf, das von Seitenwangen 12, von denen in Figur 5 nur eine dargestellt ist, seitlich begrenzt ist. Die Rückenlehne 1 weist zudem einen Materialkern in Form einer Polsterung 4 auf, die durchgehend einen Kern sowohl des Mittelteils 11 als auch der Seitenwangen 12 bildet. Innerhalb der Seitenwange 12 ist zusätzlich ein Trägerelement 122 vorhanden, um die Seitenwange zu stabilisieren. Die Polsterung ist von einem Sitzbezug 5 abgedeckt.

In der Seitenwange 12 sind zwischen der Polsterung 4 und dem Bezug 5 zwei aufblasbare Elemente 3a, 3b sich teilweise überlappend angeordnet, wobei der Bezug 5 im Bereich der aufblasbaren Elemente 3a, 3b eine Abdeckung für diese darstellt. Die aufblasbaren Elemente 3a, 3b erstrecken sich jeweils mit einem Abschnitt in einem Bereich 121 der Seitenwange 12, der einem auf dem Sitz befindlichen Fahrzeuginsassen zugewandt ist, sind jedoch entlang der Polsterung 4 versetzt zueinander angeordnet.

Die aufblasbaren Elemente 3a, 3b sind jeweils mit einem Ende 34a, 34b über Bänder 33 an einem Befestigungsabschnitt in Form eines Drehpunktes 190 drehbar festgelegt, so dass sie sich beide beim Entfalten um den Drehpunkt 190 herum, d.h. näherungsweise auf einer Kreisbahn, auf den zu schützenden Fahrzeuginsassen zu bewegen. Durch die versetzte Anordnung der aufblasbaren Elemente 3a, 3b befindet sich das dem zu schützenden Fahrzeuginsassen nähere aufblasbare Element 3b mit einem Teilbereich - in Fahrzeugvorwärtsrichtung betrachtet - vor dem inneren aufblasbaren Element 3a und übt einen Impuls insbesondere auf den Thoraxbereich des Fahrzeuginsassen aus.

Der Fahrzeugsitz weist darüber hinaus Mittel zum Ausüben einer Rückstellkraft auf den Bezug 5 in Form einer in der Seitenwange 12 angeordneten Feder 85 auf. Die Feder 85 ist mit einem Endabschnitt 51 des Bezuges 5 verbunden, so dass sie einerseits ein Dehnen des Bezuges 5 zulässt, wenn sich die (oder eines der) aufblasbaren Elemente 3a, 3b entfalten, so dass der Bezug 5 durch die sich entfaltenden aufblasbaren Elemente 3a, 3b nicht zerstört wird. Andererseits übt die Feder 85 eine Rückstellkraft auf den (durch die aufgeblasenen Elemente 3a, 3b gedehnten) Bezug 5 auf, so dass dieser bei einem Wiederentleeren der aufblasbaren Elemente 3a, 3b in seine ursprüngliche Lage zurückkehrt, d.h. dann im Wesentlichen wieder an dem Materialkern 4 anliegt.

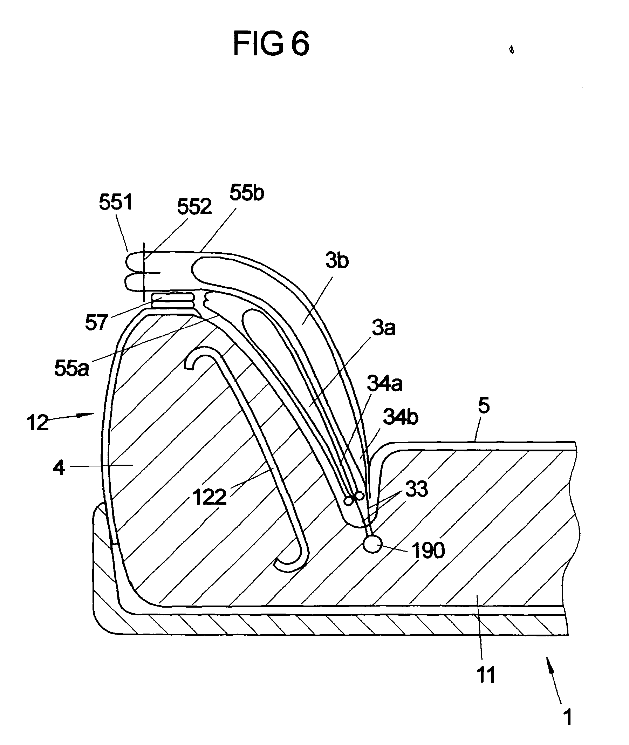

Figur 6 betrifft eine weitere Variante der Erfindung, wobei der Aufbau der Sitzstruktur ähnlich der Fig. 5 ist. Hier sind die aufblasbaren Elemente 3a, 3b jedoch in separaten, taschenartigen Umhüllungen 55a, 55b umgeben, die mit dem Bezug 5 verbunden oder einstückig mit ihm ausgebildet sind. Ein Ende 551 der Umhüllung 55b des äußeren aufblasbaren Elementes 3b, das einem auf dem Sitz befindlichen Fahrzeuginsassen (nicht dargestellt) zugewandt ist, ist an der Seitenwange 12 über Befestigungsmittel in Form einer Magnetverbindung 57 lösbar (und wiederverschließbar) festgelegt. Es versteht sich, dass andere Arten von Befestigungsmitteln verwendet werden können, z.B. ein Klettverschluss. In einer anderen Variante weisen die Umhüllungen 55a, 55b keine Mittel zum Festlegen an dem Fahrzeugsitz auf, sondern sind so ausgestaltet, dass sie der Form des Fahrzeugsitzes zumindest abschnittsweise folgen, ohne mit ihm verbunden zu sein.

Wie in Fig. 5 sind die aufblasbaren Elemente über ihre Enden 34a, 34b und Bänder 33 an einem Drehpunkt 190 drehbar befestigt. Beim Aufblasen der aufblasbaren Elemente 3a, 3b löst sich das Ende 551 der äußeren Umhüllung 55b, so dass sich die Elemente 3a, 3b um den Drehpunkt 190 herum bewegen, sich aber im Vergleich mit der Variante der Figur 5 freier entfalten können. Beispielsweise können sie ein größeres Volumen annehmen und sich näher an dem zu schützenden Fahrzeuginsassen erstrecken.

Die äußere Umhüllung 55b ist in dem Beispiel der Fig. 6 aus zwei Teilstücken gebildet, die an dem Ende 551 mit einer Naht 552 verbunden sind. Es versteht sich, dass die Umhüllungen 55a, 55b jeweils auch aus einem Teil gebildet sein können. Zudem kann anstelle separater Umhüllungen 55a, 55b auch eine gemeinsame Umhüllung vorgesehen sein, die beide aufblasbare Elemente 3a, 3b gemeinsam umschließt.

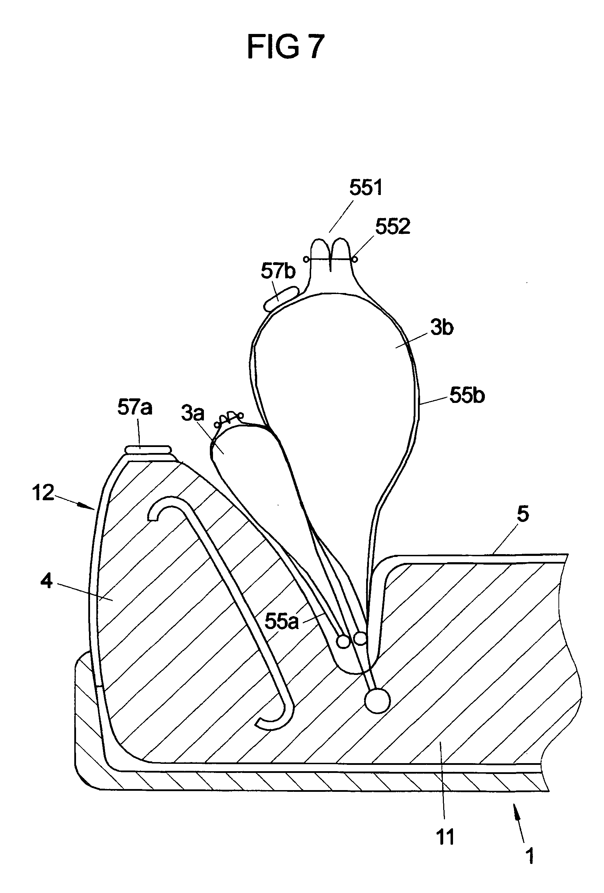

Figur 7 zeigt die Anordnung der Fig. 6 nach dem Aufblasen der aufblasbaren Elemente 3a, 3b. Das ursprünglich an der Seitenwange 12 festgelegte Ende 551 der äußeren Umhüllung 55b hat sich gelöst, wodurch sich die aufblasbaren Elemente 3a, 3b frei entfalten und sich in Richtung auf den zu schützenden Fahrzeuginsassen (nicht dargestellt) bewegen konnten. Die Umhüllungen 55a, 55b können so ausgebildet sein, dass sie wieder ihre ursprüngliche Lage, die sie vor dem Aufblasen der aufblasbaren Elemente 3a, 3b hatten, einnehmen, wenn die aufblasbaren Elemente 3a, 3b entleert werden, so dass die Verbindung 57 (mit Komponenten 57a, 57b) wieder schließt.

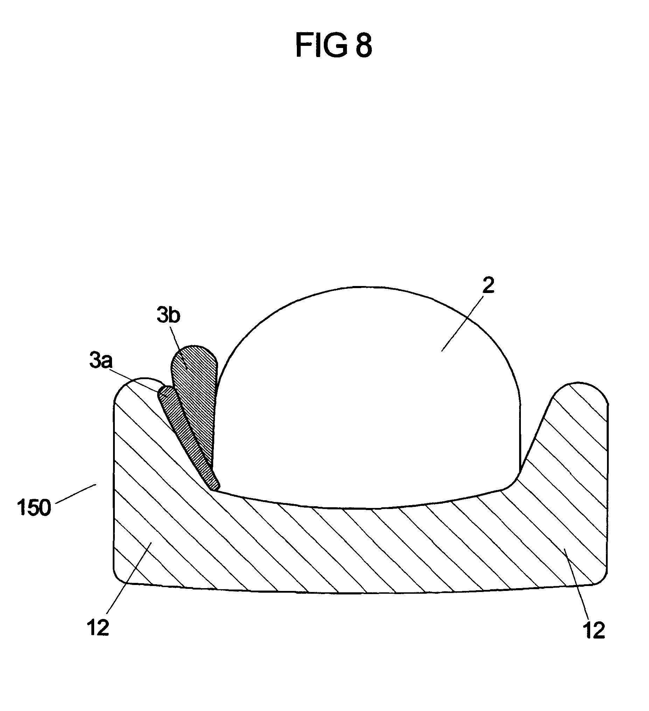

Figur 8 zeigt schematisch einen Schnitt durch einen Fahrzeugsitz, auf dem sich ein Fahrzeuginsasse 2 befindet. Der Sitz weist Seitenwangen 12 auf, die auf gegenüberliegenden Seiten an den Fahrzeuginsassen 2 angrenzen. An der einer der Seitenwangen, die der Fahrzeuglängsseite 150 näher liegt, sind zwei aufblasbare Elemente 3a, 3b angeordnet, die in aufgeblasenem Zustand dargestellt sind.

Wie in den Fig. 5 bis 7 sind die aufblasbaren Elemente 3a, 3b versetzt zueinander angeordnet, wobei sie sich zwar abschnittsweise überlappen, das näher an dem Fahrzeuginsassen 2 angeordnete aufblasbare Element 3b jedoch mit einem Teilbereich vor dem (inneren) aufblasbaren Element 3a liegt.

### Bezugszeichenliste

- 1: Rückenlehne
- 11: Mittelteil
- 12: Seitenwange
- 121: Bereich
- 122: Träger
- 13: Anlehnseite
- 14: Sitzfläche
- 2: Fahrzeuginsasse
- 21: Seite
- 3, 3a, 3b: aufblasbares Element
- 31: Kammer
- 32: Seite
- 33: Band
- 34a,34b: Ende
- 4: Polster
- 5: Sitzbezug
- 51: Endabschnitt
- 55a, 55b: Umhüllung
- 551: Endabschnitt
- 552: Naht
- 57: Magnetverbindung
- 6: Seitengassackmodul
- 7: Stützstruktur
- 71: Abschnitt
- 8: Rahmen
- 85: Feder
- 9: lokales Druckreservoir
- 90: zentraler Druckspeicher
- 95: Kompressor
- 10, 100, 110: Strömungskanal
- 111: Ventil
- 150: Fahrzeuglängsseite
- 190: Drehpunkt

## Patentansprüche

1. Fahrzeugsitzanordnung für ein Kraftfahrzeug, mit
- einem Fahrzeugsitz;
- mindestens einem an dem Fahrzeugsitz angeordneten, zum Schutz eines auf dem Fahrzeugsitz befindlichen Fahrzeuginsassen (2) aufblasbaren Element (3, 3a, 3b);
- Mitteln zum Aufblasen des aufblasbaren Elementes (3, 3a, 3b), die
- das aufblasbare Element (3, 3a, 3b) in Abhängigkeit von einem Steuersignal, das eine Kollision des Kraftfahrzeuges oder eine sich anbahnende Kollision des Kraftfahrzeuges mit einem Objekt signalisiert, aufblasen,
**dadurch gekennzeichnet, dass**
die Fahrzeugsitzanordnung so im Fahrzeug anzuordnen und das aufblasbare Element (3, 3a, 3b) derart ausgebildet und in oder an einer Seitenwange einer Rückenlehne des Fahrzeugsitzes angeordnet ist, dass es, während es als Reaktion auf das Steuersignal aufgeblasen wird, auf den Oberkörper des Fahrzeuginsassen (2) einen Impuls ausübt, so dass der gesamte Fahrzeuginsasse von einem Kollisionsabschnitt des Fahrzeuges, der mit dem Objekt kollidiert oder kollidieren wird, weg verschoben wird oder die Thoraxregion des Oberkörpers des Fahrzeuginsassen (2) eine Kippbewegung von dem Kollisionsabschnitt des Fahrzeuges weg ausführt.

2. Fahrzeugsitzanordnung nach Anspruch 1, **dadurch gekennzeichnet, dass** eine Rückenlehne (1) des Fahrzeugsitzes durch einander gegenüberliegende Seitenwangen (12) begrenzt ist, wobei in jeder der Seitenwangen (12) jeweils ein aufblasbares Element (3, 3a, 3b) angeordnet ist, wobei die Fahrzeugsitzanordnung so ausgebildet ist, dass dasjenige aufblasbare Element (3, 3a, 3b) aktiviert wird, das der voraussichtlich von der Kollision betroffenen Fahrzeuglängsseite zugewandt ist.

3. Fahrzeugsitzanordnung nach Anspruch 1 oder 2, **dadurch gekennzeichnet, dass** durch den Impuls im Wesentlichen nur der Oberkörper des Fahrzeuginsassen (2) bewegt wird.

4. Fahrzeugsitzanordnung nach einem der vorhergehenden Ansprüche, **dadurch gekennzeichnet, dass** das aufblasbare Element (3, 3a, 3b) einen Impuls ausübt, der den Fahrzeuginsassen (2) auf die zum Fahrzeugsitz nächstliegende Längsseite des Kraftfahrzeuges zu bewegt, wenn der Kollisionsabschnitt die Längsseite (150) des Kraftfahrzeuges umfasst, die der zum Fahrzeugsitz nächstliegenden Längsseite des Kraftfahrzeuges gegenüberliegt.

5. Fahrzeugsitzanordnung nach einem der vorhergehenden Ansprüche, **dadurch gekennzeichnet, dass** sich durch das Aufblasen des aufblasbaren Elementes (3, 3a, 3b) die Form des Fahrzeugsitzes verändert und dadurch der Impuls auf den Fahrzeuginsassen (2) ausgeübt wird.

6. Fahrzeugsitzanordnung nach einem der vorhergehenden Ansprüche, **dadurch gekennzeichnet, dass** die Mittel zum Aufblasen des aufblasbaren Elementes (3, 3a, 3b) ausgebildet und angeordnet sind, das aufblasbare Element (3, 3a, 3b) bei einer sich anbahnenden Kollision derart schnell aufzublasen, dass das Wegbewegen des Fahrzeuginsassen (2) vor dem Eintreten der Kollision beginnt.

7. Fahrzeugsitzanordnung nach einem der vorhergehenden Ansprüche, **dadurch gekennzeichnet, dass** die Mittel zum Aufblasen des aufblasbaren Elementes (3, 3a, 3b) aufweisen:
- mindestens ein Druckreservoir (9), das ausgebildet und vorgesehen ist, impulsartig Gas in das aufblasbare Element (3, 3a, 3b) abzugeben; und
- mindestens einen in den Fahrzeugsitz integrierten oder außerhalb des Fahrzeugsitzes angeordneten Druckspeicher (90) zum Befüllen des Druckreservoirs (9).

8. Fahrzeugsitzanordnung nach Anspruch 7, **gekennzeichnet durch** einen zwischen dem Druckreservoir (9) und dem aufblasbaren Element (3, 3a, 3b) verlaufenden Strömungskanal (10), der mittels eines Ventils (111) als Reaktion auf ein Steuersignal schlagartig freigegeben werden kann, so dass das aufblasbare Element schlagartig befüllt werden kann.

9. Fahrzeugsitzanordnung nach einem der Ansprüche 7 oder 8, **dadurch gekennzeichnet, dass** das Druckreservoir (9) eine mit Gas oder Flüssiggas befüllte Aufnahme ist.

10. Fahrzeugsitzanordnung nach einem der vorhergehenden Ansprüche, **dadurch gekennzeichnet, dass** das aufblasbare Element (3, 3a, 3b) ausgebildet ist, nach einem Aufblasen und Entleeren wieder seinen Zustand vor dem Aufblasen einzunehmen.

11. Fahrzeugsitzanordnung nach einem der vorhergehenden Ansprüche, **gekennzeichnet durch** mindestens zwei aufblasbare Elemente (3, 3a, 3b), die so angeordnet sind, dass sie einen Impuls auf den Fahrzeuginsassen in im Wesentlichen gleicher Richtung ausüben können.

12. Fahrzeugsitzanordnung nach einem der vorhergehenden Ansprüche, **dadurch gekennzeichnet, dass** das aufblasbare Element (3, 3a, 3b) mindestens eine nicht gasdicht ausgeführte aufblasbare Kammer aufweist.

13. Fahrzeugsitzanordnung nach einem der vorhergehenden Ansprüche, **dadurch gekennzeichnet, dass** das aufblasbare Element (3a, 3b) mit einem Abschnitt (34a, 34b) so an einem Befestigungsabschnitt (190) des Fahrzeugsitzes befestigt ist, dass es beim Entfalten eine Drehbewegung um den Befestigungsabschnitt (190) herum auf den Fahrzeuginsassen (2) zu ausführt.

14. Fahrzeugsitzanordnung für ein Kraftfahrzeug nach einem der vorhergehenden Ansprüche, **dadurch gekennzeichnet, dass** das aufblasbare Element Mittel aufweist, die einen Aufprall des Fahrzeuginsassen (2) auf das aufblasbare Element (3, 3a, 3b) in aufgeblasenem Zustand dämpfen, wobei die Mittel mindestens eine Ausströmöffnung aufweisen, über die Gas aus dem aufblasbaren Element (3, 3a, 3b) herausströmen kann.

15. Verfahren zum Schützen eines Fahrzeuginsassen mit den Schritten:
- Bereitstellen eines Fahrzeugsitzes mit mindestens einem in oder an einer Seitenwange einer Rückenlehne des Fahrzeugsitzes angeordneten aufblasbaren Element (3, 3a, 3b);
- Erzeugen eines Steuersignals, das eine Kollision des Kraftfahrzeuges oder eine sich anbahnende Kollision des Kraftfahrzeuges mit einem Objekt signalisiert;
- Aufblasen des aufblasbaren Elementes (3, 3a, 3b) in Abhängigkeit von dem Steuersignal, wobei
**dadurch gekennzeichnet, dass**
das aufblasbare Element (3, 3a, 3b), während es als Reaktion auf das Steuersignal aufgeblasen wird, auf den Oberkörper eines in dem Fahrzeugsitz befindlichen Fahrzeuginsassen (2) einen Impuls ausübt, so dass der gesamte Fahrzeuginsasse von einem Kollisionsabschnitt des Fahrzeuges, der mit dem Objekt kollidiert oder kollidieren wird, weg verschoben wird oder die Thoraxregion des Oberkörpers des Fahrzeuginsassen (2) eine Kippbewegung von dem Kollisionsabschnitt des Fahrzeuges weg ausführt, wobei
- zu einem ersten Zeitpunkt ein erstes Steuersignal und zu einem zweiten Zeitpunkt ein zweites Steuersignal erzeugt wird; und
- das aufblasbare Element (3, 3a, 3b) auf das erste Steuersignal mit einer ersten Befüllgeschwindigkeit und auf das zweite Steuersignal mit einer zweiten Befüllgeschwindigkeit befüllt wird, die verschieden von der ersten Befüllgeschwindigkeit ist.

## Claims

1. Motor vehicle seat arrangement for a motor vehicle, comprising
- a vehicle seat;
- at least one inflatable element (3, 3a, 3b) arranged on the vehicle seat which element can be inflated in order to protect a vehicle occupant (2) occupying the vehicle seat;
- means for inflating the inflatable element (3, 3a, 3b) which
- inflate the inflatable element (3, 3a, 3b) depending on a control signal that signals a colt lision of the motor vehicle or an impending collision of the motor vehicle with an object,
**characterized in that**
the vehicle seat arrangement is to be arranged in the vehicle and the inflatable element (3, 3a, 3b) is designed and arranged in or on a side wall of a backrest of the vehicle seat in a way that it exerts a momentum on the upper part of the body of the vehicle occupant while it is inflated in answer to the control signal, so that the whole vehicle occupant is moved away from a collision section of the vehicle that collides or is going to collide with the object or that the thorax region of the upper part of the body of the vehicle occupant (2) performs a tilting movement away from the collision section of the vehicle.

2. Vehicle seat arrangement according to claim 1, **characterized in that** a backrest (1) of the vehicle seat is limited by opposing side walls (12), wherein an inflatable element (3, 3a, 3b) is arranged in each of the side walls (12), respectively, wherein the vehicle seat arrangement is designed such that the inflatable element (3, 3a, 3b) which faces the vehicle longitudinal side that is expected to be affected by the collision is activated.

3. Vehicle seat arrangement according to claim 1 or 2, **characterized in that** due to the momentum substantially only the upper part of the body of the vehicle occupant (2) is moved.

4. Vehicle seat arrangement according to one of the preceding claims, **characterized in that** the inflatable element (3, 3a, 3b) exerts a momentum which moves the vehicle occupant (2) towards the longitudinal side of the motor vehicle being nearest to the vehicle seat in case the collision section contains the longitudinal side (150) of the motor vehicle facing the longitudinal side of the motor vehicle being nearest to the vehicle seat.

5. Vehicle seat arrangement according to one of the preceding claims, **characterized in that** the shape of the vehicle seat changes due to the inflation of the inflatable element (3, 3a, 3b) and thereby the momentum is exerted on the vehicle occupant (2).

6. Vehicle seat arrangement according to one of the preceding claims, **characterized in that** the means for inflating the inflatable element (3, 3a, 3b) are designed and arranged to quickly inflate the inflatable element (3, 3a, 3b) upon an impending collision in a way that moving-away the vehicle occupant (2) starts before the incidence of the collision.

7. Vehicle seat arrangement according to one of the preceding claims, **characterized in that** the means for inflating the inflatable element (3, 3a, 3b) comprising:
- at least one pressure reservoir (9) which is designed and provided to deliver gas to the inflatable element (3, 3a, 3b) in an impulse-like manner; and
- at least one pressure storage (90) integrated into the vehicle seat or arranged outside the vehicle seat for filling the pressure reservoir (9).

8. Vehicle seat arrangement according to claim 7, **characterized by** a flow channel (10) running between the pressure reservoir (9) and the inflatable element (3, 3a, 3b), which flow channel (10) can be set free abruptly in answer to a control signal, so that the inflatable element can be inflated abruptly.

9. Vehicle seat arrangement according to one of the claims 7 or 8, **characterized in that** the pressure reservoir (9) is a reception filled with gas or liquid gas.

10. Vehicle seat arrangement according to one of the preceding claims, **characterized in that** the inflatable element (3, 3a, 3b) is designed to again resume after an inflation and emptying its state before the inflation.

11. Vehicle seat arrangement according to one of the preceding claims, **characterized by** at least two inflatable elements (3, 3a, 3b) which are arranged such that they are able to exert a momentum on the vehicle occupant in substantially the same direction.

12. Vehicle seat arrangement according to one of the preceding claims, **characterized in that** the inflatable element (3, 3a, 3b) comprises at least one inflatable chamber being designed non gas-tight.

13. Vehicle seat arrangement according to one of the preceding claims, **characterized in that** the inflatable element (3a, 3b) is fastened with a section (34a, 34b) to a fastening section (190) of the vehicle seat in a way, that upon inflation it performs a rotation movement around the fastening section (190) towards the vehicle occupant (2).

14. Vehicle seat arrangement for a motor vehicle according to one of the preceding claims, **characterized in that** the inflatable element comprises means damping an impact of the vehicle occupant (2) onto the inflatable element (3, 3a, 3b) being in an inflated state, wherein the means comprise at least one exhaust port via which gas can be exhausted out of the inflatable element (3, 3a, 3b).

15. Method for protecting a vehicle occupant comprising the steps of:
- providing a vehicle seat having at least one inflatable element (3, 3a, 3b) arranged in or on a side wall of a backrest of the vehicle seat;
- generating a control signal signalling a collision of the motor vehicle or an impending collision of the motor vehicle with an object;
- inflating the inflatable element (3, 3a, 3b) depending on the control signal,
**characterized in that**
the inflatable element (3, 3a, 3b), while it is inflated in answer to the control signal, exerts a momentum on the upper part of the body of a vehicle occupant (2) occupying the vehicle seat, such that the whole vehicle occupant is moved away from a collision section of the vehicle which collides with the object or is going to collide with the object or such that the thorax region of the upper part of the body of the vehicle occupant (2) performs a tilting movement away from the collision section of the vehicle, wherein
- at a first point in time a first control signal and at a second point in time a second control signal is generated; and
- the inflatable element (3, 3a, 3b) is filled with a first filling velocity due to the first control signal and filled with a second filling velocity due to the second control signal, which second filling velocity is different from the first filling velocity.

## Revendications

1. Agencement de siège de véhicule pour véhicule automobile, comprenant
- un siège de véhicule ;
- au moins un élément gonflable (3, 3a, 3b) agencé sur le siège de véhicule et destiné à la protection d'un occupant (2) du véhicule qui se trouve sur le siège de véhicule ;
- des moyens pour gonfler l'élément gonflable (3, 3a, 3b), qui
- gonflent l'élément gonflable (3, 3a, 3b) en fonction d'un signal de commande qui signalise une collision du véhicule automobile ou une collision imminente du véhicule automobile avec un objet,
**caractérisé en ce que**
l'agencement de siège de véhicule est à agencer dans le véhicule de telle façon et l'élément gonflable (3, 3a, 3b) est réalisé de telle manière et agencé dans ou sur une joue latérale d'un dossier du siège de véhicule de telle manière que, pendant qu'il est gonflé en réaction au signal de commande, il exerce sur le haut du corps de l'occupant (2) du véhicule une impulsion, de telle sorte que l'occupant du véhicule est déplacé dans son ensemble en éloignement d'une portion de collision du véhicule qui est en collision ou va être en collision avec l'objet, ou que la région thoracique du haut du corps de l'occupant (2) du véhicule exécute un mouvement de basculement en éloignement de la portion de collision du véhicule.

2. Agencement de siège de véhicule selon la revendication 1, **caractérisé en ce qu'**un dossier (1) du siège de véhicule est limité par des joues latérales (12) mutuellement opposées, et un élément gonflable (3, 3a, 3b) est respectivement agencé dans chacune des joues latérales (12), et l'agencement de siège de véhicule est ainsi réalisé que celui des éléments gonflables (3, 3a, 3b) qui est activé est celui qui est tourné vers le côté longitudinal du véhicule qui sera, selon les prédictions, concerné par la collision.

3. Agencement de siège de véhicule selon la revendication 1 ou 2, **caractérisé en ce que** sensiblement seule le haut du corps de l'occupant (2) est déplacée par l'impulsion.

4. Agencement de siège de véhicule selon l'une des revendications précédentes, **caractérisé en ce que** l'élément gonflable (3, 3a, 3b) exerce une impulsion qui déplace l'occupant (2) du véhicule en direction du côté longitudinal du véhicule automobile qui est le plus proche du siège de véhicule si a portion de collision comprend le côté longitudinal (150) du véhicule automobile qui est opposé au côté longitudinal du véhicule automobile qui est le plus proche du siège de véhicule.

5. Agencement de siège de véhicule selon l'une des revendications précédentes, **caractérisé en ce que**, en raison du gonflage de l'élément gonflable (3, 3a, 3b), la forme du siège de véhicule est modifiée et de ce fait l'impulsion est exercée sur l'occupant (2) du véhicule.

6. Agencement de siège de véhicule selon l'une des revendications précédentes, **caractérisé en ce que** les moyens pour gonfler l'élément gonflable (3, 3a, 3b) sont réalisés et agencés pour gonfler l'élément gonflable (3, 3a, 3b) lors d'une collision imminente, avec une telle rapidité que le déplacement de l'occupant (2) en éloignement commence avant l'apparition de la collision.

7. Agencement de siège de véhicule selon l'une des revendications précédentes, **caractérisé en ce que** les moyens pour gonfler l'élément gonflable (3, 3a, 3b) comprennent :
- au moins un réservoir sous pression (2), qui est réalisé et prévu pour délivrer du gaz dans l'élément gonflable (3, 3a, 3b) à la manière d'une impulsion ; et
- au moins un accumulateur de pression (90) intégré dans le siège de véhicule ou agencé à l'extérieur du siège de véhicule, pour remplir le réservoir sous pression (9).

8. Agencement de siège de véhicule selon la revendication 7, **caractérisé par** un canal d'écoulement (10), s'étendant entre le réservoir sous pression (9) et l'élément gonflable (3, 3a, 3b), qui peut être libéré brusquement au moyen d'une valve (111) en réaction à un signal de commande, de sorte que l'élément gonflable peut être rempli brusquement.

9. Agencement de siège de véhicule selon l'une des revendications 7 ou 8, **caractérisé en ce que** le réservoir sous pression (9) est un conteneur rempli de gaz ou de gaz liquide.

10. Agencement de siège de véhicule selon l'une des revendications précédentes, **caractérisé en ce que** l'élément gonflable (3, 3a, 3b) est réalisé pour occuper, après un gonflage et un vidage, à nouveau son état avant le gonflage.

11. Agencement de siège de véhicule selon l'une des revendications précédentes, **caractérisé par** au moins deux éléments gonflables (3, 3a 3b) qui sont agencés de telle façon qu'ils peuvent exercer une impulsion sur l'occupant du véhicule essentiellement dans la même direction.

12. Agencement de siège de véhicule selon l'une des revendications précédentes, **caractérisé en ce que** l'élément gonflable (3, 3a, 3b) comprend au moins une chambre gonflable qui n'est pas réalisée étanche au gaz.

13. Agencement de siège de véhicule selon l'une des revendications précédentes, **caractérisé en ce que** l'élément gonflable (3a, 3b) est fixé par tronçon (34a, 34b) sur un tronçon de fixation (190) du siège de véhicule de telle façon que lors d'un déploiement il exécute un mouvement de rotation autour du tronçon de fixation (190) vers l'occupant (2) du véhicule.

14. Agencement de siège de véhicule selon l'une des revendications précédentes, **caractérisé en ce que** l'élément gonflable comprend des moyens qui amortissent un impact de l'occupant (2) du véhicule sur l'élément gonflable (3, 3a, 3b) dans la situation gonflée, et lesdits moyens comprennent au moins une ouverture d'échappement via laquelle le gaz peut s'écouler hors de l'élément gonflable (3, 3a, 3b).

15. Procédé pour protéger un occupant d'un véhicule, comprenant les étapes consistant à :
- préparer un siège de véhicule avec au moins un élément gonflable (3, 3a, 3b) agencé dans ou sur une joue latérale d'un dossier du siège de véhicule ;
- générer un signal de commande qui signalise une collision du véhicule automobile ou une collision imminente du véhicule automobile avec un objet ;
- gonfler l'élément gonflable (3, 3a, 3b) en fonction du signal de commande,
**caractérisé en ce que**
pendant qu'il est gonflé en réaction au signal de commande, l'élément gonflable (3, 3a, 3b) exerce sur le haut du corps d'un occupant (2) du véhicule qui se trouve dans le siège de véhicule, une impulsion de telle manière que l'occupant du véhicule est déplacé dans son ensemble depuis un tronçon de collision du véhicule qui est en collision ou va être en collision avec l'objet, ou que la région thoracique du haut du corps de l'occupant (2) exécute un mouvement de basculement en éloignement du tronçon de collision du véhicule, et
- à un premier instant un premier signal de commande est généré, et à un deuxième instant un deuxième signal de commande est généré ; et
- l'élément gonflable (3, 3a, 3b) est rempli, suite au premier signal de commande, avec une première vitesse de remplissage, et suite au deuxième signal de commande, avec une deuxième vitesse de remplissage qui est différente de la première vitesse de remplissage.
